# FASCICULE DE BREVET EUROPEEN

(11) **EP 0 717 184 B1**
(45) Date de publication et mention de la délivrance du brevet: **06.10.1999**
(21) Numéro de dépôt: 95402398.2
(22) Date de dépôt: 26.10.1995
(51) Int. Cl.: F02K 1/76, F02K 1/60

(54) **Inverseur de poussée à portes pivotantes mobiles en translation**
Schubumkehrvorrichtung mit in Längsrichtung verschiebbaren Klappen
Thrust reverser with pivotable doors which are translatable

(30) Priorité: 15.12.1994 FR 9415365; 10.08.1995 FR 9509714; 04.09.1995 FR 9510330
(43) Date de publication de la demande: 19.06.1996
(73) Titulaire: The Dee Howard Company, San Antonio, Texas 78246 (US)
(72) Inventeur: Fage, Etienne, 83350 Ramatuelle (FR)
(74) Mandataire: Bloch, Gérard

(56) Documents cités:
- EP-A- 0 366 829
- FR-A- 1 134 418
- FR-A- 1 388 290
- FR-A- 2 614 939
- US-A- 2 972 860
- US-A- 4 519 561
- US-A- 5 181 676
- US-A- 5 224 342
- US-A- 5 243 817

## Description

La présente invention concerne un inverseur de poussée pour moteur à réaction d'aéronef, ainsi qu'un moteur d'aéronef équipé dudit inverseur de poussée.

On sait que les inverseurs de poussée pour moteur à réaction sont utilisés pour raccourcir la distance d'arrêt lors du freinage d'un aéronef, par une inversion de la direction du jet gazeux délivré par le moteur, laquelle produit une poussée inverse de freinage.

Par exemple par le brevet français FR-A-2 348 371, on connaît déjà un inverseur de poussée pour moteur à réaction d'aéronef, comportant :
- au moins une porte dont l'extrémité arrière est montée pivotante par rapport audit moteur, autour d'un axe de pivotement fixe transversal à l'axe longitudinal dudit moteur ; et
- des moyens pour faire pivoter chaque porte, autour dudit axe de pivotement, entre :
   . une position extrême escamotée, dans laquelle ladite porte est repliée avec son extrémité avant dirigée vers ledit moteur ; et
   . une position extrême déployée, dans laquelle ladite porte est disposée au moins sensiblement transversalement audit axe longitudinal du moteur, avec son extrémité avant écartée de celui-ci.

Dans ce type d'inverseur, le verrouillage et la sécurité contre le déploiement intempestif des portes sont obtenus par un système de verrouillage des portes (voir par exemple le brevet français FR-A-2 494 775) comportant :
- deux crochets mobiles par porte, actionnés par vérins et système de commande électro-hydraulique ;
- des moyens pour faire pivoter chaque porte entre la position normale escamotée et une position extrême surescamotée, constituant un préalable nécessaire au déverrouillage des crochets et au pivotement en sens inverse de la porte vers la position extrême déployée.

En vol de l'aéronef, un tel inverseur de poussée présente l'inconvénient d'engendrer une traînée aérodynamique supplémentaire due à l'épaisseur importante de la surface de culot du bord de fuite de chaque porte, ce qui conduit à une perte de poussée interne ainsi qu'à une augmentation de la traînée externe.

La traînée externe est, en outre, également augmentée du fait des déformations des portes sous l'effet des forces de pression internes qu'elles ont à contenir et qui ne sont équilibrées que par des réactions concentrées aux crochets. Ces déformations entraînent, en effet, un désaffleurement entre les surfaces externes des portes et les surfaces des structures fixes adjacentes.

Il est à noter, par ailleurs, que malgré les avantages qu'ils offrent pendant la phase de freinage, les inverseurs de poussée sont également critiqués pour le supplément de poids qu'ils entraînent.

La présente invention vise à pallier l'ensemble des inconvénients mentionnés ci-dessus et a pour premier objectif de fournir un moteur à réaction équipé d'un inverseur de poussée conçu pour conduire à une diminution, d'une part, de l'épaisseur de la surface de culot et, d'autre part, de la traînée externe résultant desdites déformations.

Un autre objectif de l'invention est de fournir un moteur à réaction équipé d'un inverseur de poussée, dont le supplément de poids est minimisé par rapport aux moteurs connus, et dont la fiabilité, notamment en phase de vol, est accrue.

Un autre objectif est enfin d'étendre aux inverseurs dont les portes ne supportent pas, dans la position normale escamotée, des efforts de pression notables, des avantages analogues en matière de sécurité anti-déploiement accidentel à ceux dont peuvent bénéficier les inverseurs à portes pressurisées et à surescamotage commandé (voir par exemple FR-A-2 494 775).

A cette fin, selon l'invention, l'inverseur du type rappelé ci-dessus comportant, de plus, des moyens pour déplacer ledit axe de pivotement le long dudit axe longitudinal du moteur, entre une position avancée et une position reculée et réciproquement, est remarquable :
- en ce qu'il comporte des moyens de butée radiale comportant des éléments solidaires de l'extrémité avant de chaque porte et susceptibles de coopérer avec des éléments conjugués solidaires dudit moteur ; et
- en ce que lesdits moyens de butée radiale sont adaptés pour interdire le déploiement de ladite porte dans la position avancée dudit axe de pivotement et pour autoriser ce déploiement dans la position reculée dudit axe de pivotement.

De préférence, la distance séparant lesdites positions avancée et reculée le long de l'axe longitudinal du moteur est de l'ordre de 1% à 2% du diamètre de l'orifice de sortie du moteur.

Ainsi, selon l'invention, lesdits moyens de butée radiale constituent des moyens de verrouillage de la porte beaucoup moins lourds que le système à crochets, car introduisant des réactions réparties le long de l'extrémité avant de la porte et ne comportant aucun organe mobile, ni système électro-hydraulique associé. Ils garantissent en outre un affleurement parfait des surfaces fixes et mobiles, éliminant de ce fait une source d'augmentation de la traînée externe imputable à l'inverseur. De plus, le recul de la porte, préalable à son déploiement, permet d'allonger les carénages externes et les flasques de façon à réduire la découpe en "gueule de poisson" formée entre les portes d'inverseur, ainsi que l'épaisseur résiduelle de la surface de culot. Enfin, ce recul entraîne aussi la réduction de la contre-pression créée par le déploiement de la porte, facilitant ainsi l'intégration de l'inverseur de poussée au moteur.

De préférence, lesdits moyens de déplacement dudit axe de pivotement sont formés par les moyens de pivotement de ladite porte.

Dans un mode préféré de réalisation, lesdits moyens de déplacement dudit axe de pivotement le long dudit axe longitudinal du moteur comportent des moyens de guidage à coulisses et coulisseaux.

Dans ce cas, à chaque porte, sont associés deux coulisseaux et deux coulisses, lesdits coulisseaux définissant ledit axe de pivotement et la position dudit axe de pivotement le long dudit axe longitudinal du moteur étant définie par la position relative de chaque coulisseau dans chaque coulisse.

Lesdits coulisseaux pourraient être portés par le moteur, alors que lesdites coulisses seraient solidaires de ladite porte. Cependant, avantageusement, lesdits coulisseaux sont solidaires de ladite porte, tandis que lesdites coulisses sont prévues sur ledit moteur.

Le déplacement de l'axe de pivotement entre sa position avancée et sa position reculée peut se faire parallèlement à l'axe dudit moteur, lesdites coulisses étant alors rectilignes et parallèles à ce dernier axe. Cependant, pour réduire encore plus la découpe en "gueule de poisson" et l'épaisseur du culot, il peut être avantageux que, en position reculée, ledit axe de pivotement soit plus éloigné dudit axe longitudinal du moteur qu'en position avancée et que lesdits moyens de déplacement dudit axe de pivotement le long dudit axe longitudinal du moteur soient aptes à écarter ledit axe de pivotement dudit axe longitudinal du moteur lorsque ledit axe de pivotement passe de sa position avancée à sa position reculée et, inversement, à rapprocher ledit axe de pivotement dudit axe longitudinal du moteur lorsque ledit axe de pivotement passe de sa position reculée à sa position avancée.

Dans ce cas, lesdites coulisses peuvent présenter une forme arquée ou coudée, la portion avant (du côté de la position avancée dudit axe de pivotement) desdites coulisses étant la portion la plus proche dudit axe longitudinal du moteur.

En variante, dans le cas où ladite porte est soumise, de la part dudit moteur, à des forces de pression agissant dans le sens du déploiement, lesdites coulisses peuvent présenter une forme telle que, en position extrême escamotée de ladite porte et en position avancée dudit axe de pivotement, la coopération desdits coulisseaux avec lesdites coulisses, associée à l'action desdites forces de pression sur ladite porte, verrouille ledit axe de pivotement dans sa position avancée et interdit donc le déploiement de la porte.

Pour obtenir cet effet autobloquant, lesdites coulisses peuvent avoir la forme d'un arc, dont la portion avant est plus éloignée dudit axe longitudinal du moteur que la portion centrale dudit arc.

La force s'opposant alors au recul des portes croît avec la pression interne agissant sur elles. Ladite force croît donc avec le régime du moteur et la vitesse de l'avion et l'on peut ajuster la force des moyens commandant le recul des portes pour que celui-ci soit impossible au-dessus d'un régime de moteur proche du ralenti et au-dessus d'une vitesse de l'avion peu supérieure à la vitesse d'approche. Ainsi, même en cas de fonctionnement intempestif desdits moyens commandant le recul des portes, une protection totale contre les risques de déploiement en vol est assurée pendant les phases de décollage, de montée, de croisière, de descente et de remise des gaz en cas d'atterrissage refusé. Cette protection est particulièrement remarquable en termes de fiabilité et de gain de masse puisqu'elle est obtenue sans nécessiter l'adjonction d'un quelconque dispositif supplémentaire.

De plus, pour assurer la stabilité dudit axe de pivotement dans sa position avancée et dans sa position reculée, lorsque les forces de pression interne sont faibles ou inexistantes, lesdits moyens de déplacement sont avantageusement associés à un système d'arc-boutement sollicité par des moyens de butée élastique, adapté, d'une part, pour conférer audit axe de pivotement deux positions stables correspondant respectivement auxdites positions avancée et reculée et, d'autre part, pour permettre un changement de position dudit axe de pivotement sous l'effet d'un effort supérieur à un seuil déterminé par lesdits moyens de butée élastique.

Dans le cas où ledit axe de pivotement est défini par deux pivots alignés, respectivement disposés de part et d'autre de ladite porte, ledit système d'arc-boutement comporte alors, pour chaque pivot, une biellette reliée audit pivot à une de ses extrémités, et articulée, à son autre extrémité, sur une tige apte à se déplacer axialement selon un axe parallèle à l'axe longitudinal du moteur, ladite tige étant sollicitée par une butée à ressort apte à s'opposer à son déplacement axial.

Dans le cas usuel où ledit inverseur de poussée comporte deux portes opposées et symétriques par rapport audit axe longitudinal du moteur, il est avantageux que, pour chaque couple de pivots disposés l'un en regard de l'autre et associés respectivement à l'une et à l'autre des deux portes opposées, ledit système d'arc-boutement comprenne une tige s'étendant sensiblement dans le plan du symétrie du moteur, et deux biellettes symétriques articulées chacune à ladite tige et reliées respectivement à l'un desdits pivots.

Lesdits moyens de butée radiale peuvent être formés, d'une part, par le bord avant de ladite porte et, d'autre part, par le bord arrière de la partie amont dudit moteur, ledit bord avant de la porte étant apte à s'engager au moins localement sous ledit bord arrière de ladite partie amont du moteur.

En variante, lesdits moyens de butée radiale peuvent être formés, d'une part, par des pions faisant saillie longitudinalement par rapport au bord avant de ladite porte et, d'autre part, par des logements ménagés axialement relativement au bord arrière de la partie amont dudit moteur et aptes à loger chacun un pion.

Selon une autre variante de réalisation, lesdits moyens de déplacement des pivots peuvent comporter pour chaque porte deux porte-pivots rotatifs portés chacun par un axe de rotation solidaire du moteur et portant chacun un pivot excentré, les deux pivots étant alignés pour définir ledit axe de pivotement. Ainsi, lesdits pivots alignés peuvent prendre simultanément soit une position avancée, soit une position reculée, lesdites positions desdits pivots définissant bien entendu une position avancée et une position reculée pour ledit axe de pivotement. Dans cette variante, le déplacement des pivots est donc identique au déplacement obtenu dans la variante à coulisses et coulisseaux lorsque les coulisses ont la forme d'un arc de cercle.

Selon encore une autre variante, lesdits moyens de butée radiale sont formés, d'une part, par au moins un élément de butée solidaire de l'extrémité avant de ladite porte et, d'autre part, par autant de réceptacles solidaires de la partie amont fixe et avec chacun desquels peut coopérer un élément de butée, lesdits éléments de butée et réceptacles ayant un profil de came adapté pour engendrer une réaction comportant une composante longitudinale apte à s'opposer au recul de la porte. Cette variante permet d'interdire le recul et le déploiement en dehors des conditions de vol volontairement restreintes (vitesse du moteur proche du ralenti et vitesse de l'avion proche de la vitesse d'approche) dans le cas où le déplacement des pivots ne peut avoir lieu suivant un arc garantissant l'effet autobloquant.

Dans le cas où la coopération entre ledit élément de butée et ledit réceptacle risquerait d'occasionner des grippages, lors du déverrouillage par surescamotage des portes et du recul des pivots, la variation incontrôlable des forces de frottement entraînant une certaine imprécision sur les conditions réelles du déverrouillage, il est avantageux de prévoir, en variante, un système de surescamotage automatique : tel que :
- en position escamotée, chaque porte est soumise à l'action de moyens élastiques dans le sens du surescamotage de ladite porte ; et que
- ledit inverseur comporte des moyens anti-recul qui interdisent le passage dudit axe de pivotement de sa position avancée à sa position reculée, tant que les forces de pression exercées par ledit moteur sur ladite porte dans le sens du déploiement sont supérieures à la force contraire exercée sur ladite porte par lesdits moyens élastiques.

Ainsi, on supprime tout frottement parasite de déverrouillage et de recul et on découple le mouvement de déverrouillage (surescamotage) du mouvement de recul des pivots. Les moyens de déplacement assurent donc le recul et le déverrouillage dans des conditions rigoureusement fiables et reproductibles.

Lesdits moyens élastiques et/ou lesdits moyens anti-recul peuvent être indépendants desdits moyens de butée radiale ou bien y être intégrés.

Dans le cas où lesdits moyens élastiques sont indépendants desdits moyens de butée radiale, ils sont portés, soit par l'extrémité avant de chaque porte, soit par le moteur. Ils coopèrent avec des appuis qui sont alors respectivement portés, soit par le moteur, soit par l'extrémité avant de chaque porte. Ces moyens élastiques peuvent présenter toute forme appropriée. Ils sont par exemple réalisés sous la forme de ressorts à boudin, de ressorts à lame ou de pistons à ressort.

De préférence, lesdits moyens de butée radiale comportent, pour chaque porte, au moins un élément de butée solidaire de l'extrémité avant de ladite porte et au moins un réceptacle solidaire dudit moteur, ledit réceptacle étant ouvert en regard de l'axe dudit moteur et la coopération dudit élément de butée et dudit réceptacle s'opposant au recul de l'axe de pivotement de sa position avancée à sa position reculée, lorsque la porte correspondante est en position escamotée.

Afin d'assurer la stabilité dudit axe de pivotement dans sa position reculée, lors de la rétraction des portes déployées, on prévoit de plus des moyens de durcissement desdits moyens de butée élastique, lors de la rétraction de ladite porte de sa position déployée à sa position escamotée, ledit axe de pivotement étant alors en position reculée. De préférence, ces moyens de durcissement sont hydrauliques. Par exemple, ils peuvent comprendre un piston, chargé par le fluide de la canalisation hydraulique du vérin d'escamotage de la porte et pressant lesdits moyens de butée élastique.

Afin de permettre la mise en oeuvre de la présente invention à des structures dans lesquelles chaque porte n'est pas soumise spontanément (naturellement) à des forces de pression notables par le moteur, il est avantageux de prévoir au moins une enceinte pressurisée par les gaz d'échappement de la tuyère et pourvue d'un joint souple qui, lorsque la porte est escamotée, s'applique avec étanchéité contre la face interne de ladite porte en y délimitant une zone pressurisée d'aire précise. On remarquera que ces gaz d'échappement sont à basse pression, c'est-à-dire à une pression bien inférieure à celle des gaz en sortie du compresseur du moteur.

Bien entendu, la présente invention concerne de plus un moteur à réaction pour aéronef, comportant un inverseur de poussée tel que spécifié ci-dessus.

Les figures du dessin annexé feront bien comprendre comment l'invention peut être réalisée. Sur ces figures, des références identiques désignent des éléments semblables. De plus, ces figures sont schématiques et ne respectent pas obligatoirement les rapports de dimensions.

La figure 1 montre, en vue en perspective schématique partielle, un moteur à réaction pourvu d'un inverseur de poussée à portes conforme à la présente invention.

La figure 2 est une vue longitudinale schématique partielle et agrandie, partiellement en coupe, de la partie arrière des portes d'un exemple de réalisation avantageux de l'inverseur de poussée de la figure 1 dans la position avancée des pivots qui définissent l'axe de pivotement desdites portes.

La figure 3 est une vue longitudinale similaire à celle de la figure 2, dans la position reculée desdits pivots.

La figure 4 illustre, partiellement et schématiquement, en vue comparable à la figure 2, une variante de réalisation également avantageuse de l'inverseur conforme à la présente invention.

La figure 5 est une vue longitudinale schématique, partiellement en coupe et comparable à la figure 2, de la partie arrière des portes d'une variante de réalisation de l'inverseur de poussée conforme à la présente invention, dans la position avancée des pivots.

La figure 6 est une vue longitudinale de l'inverseur de la figure 5, dans la position reculée des pivots.

La figure 7a est une vue en perspective d'un exemple de réalisation des moyens de butée radiale, équipant l'inverseur de poussée conforme à la présente invention.

La figure 7b est une coupe longitudinale des moyens de butée radiale de la figure 7a, montés sur un moteur conformément à la présente invention.

Les figures 8 et 9 montrent, en coupe longitudinale, des variantes de réalisation desdits moyens de butée radiale.

La figure 10a est une vue extérieure schématique de l'inverseur conforme à la présente invention, en position escamotée des portes avec les axes de pivotement de celles-ci en position avancée, illustrant encore une autre variante des moyens de butée radiale dudit inverseur.

La figure 10b est une coupe longitudinale partielle selon la ligne Xb-Xb de la figure 10a.

Les figures 11a et 11b correspondent respectivement aux figures 10a et 10b, les portes se trouvant toujours en position escamotée, mais avec leurs axes de pivotement en position reculée, et la figure 11b correspondant à la ligne de coupe XIb-XIb de la figure 11a.

La figure 12a illustre, en perspective, un autre exemple de réalisation desdits moyens de butée radiale, proche de ceux représenté sur la figure 7a.

La figure 12b est une coupe longitudinale des moyens de butée radiale de la figure 12a, montés sur un moteur conformément à l'invention.

La figure 13 montre, en coupe axiale, un exemple de réalisation des moyens élastiques de surescamotage sous la forme d'un piston à ressort.

Les figures 14a et 14b illustrent, respectivement en position escamotée et en position surescamotée d'une porte d'inversion, le fonctionnement d'un piston à ressort de la figure 13.

Les figures 15a et 15b illustrent, respectivement en position escamotée et en position surescamotée d'une porte d'inversion, des moyens élastiques de surescamotage réalisés sous la forme de ressort à lame.

La figure 16 illustre, en coupe longitudinale schématique, un exemple de réalisation de butée élastique durcie lors de l'escamotage des portes déployées de l'inverseur de poussée conforme à la présente invention.

Les figures 17 et 18 illustrent la création de zones pressurisées sous les portes d'inverseur, dans des moteurs dans lesquels la face interne desdites portes est soumise à une pression peu différente de la pression ambiante.

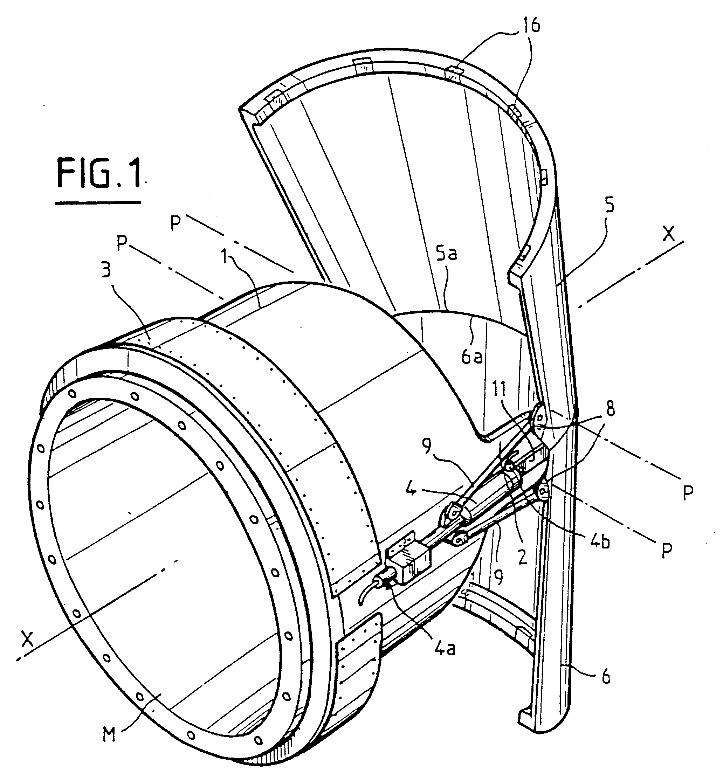

Le moteur à réaction M avec inverseur de poussée représenté schématiquement et partiellement sur la figure 1 présente un axe longitudinal X-X et comporte, de façon connue, une tuyère 1 prolongée par deux flasques 2, diamétralement opposés, dont un seul est visible sur la figure 1.

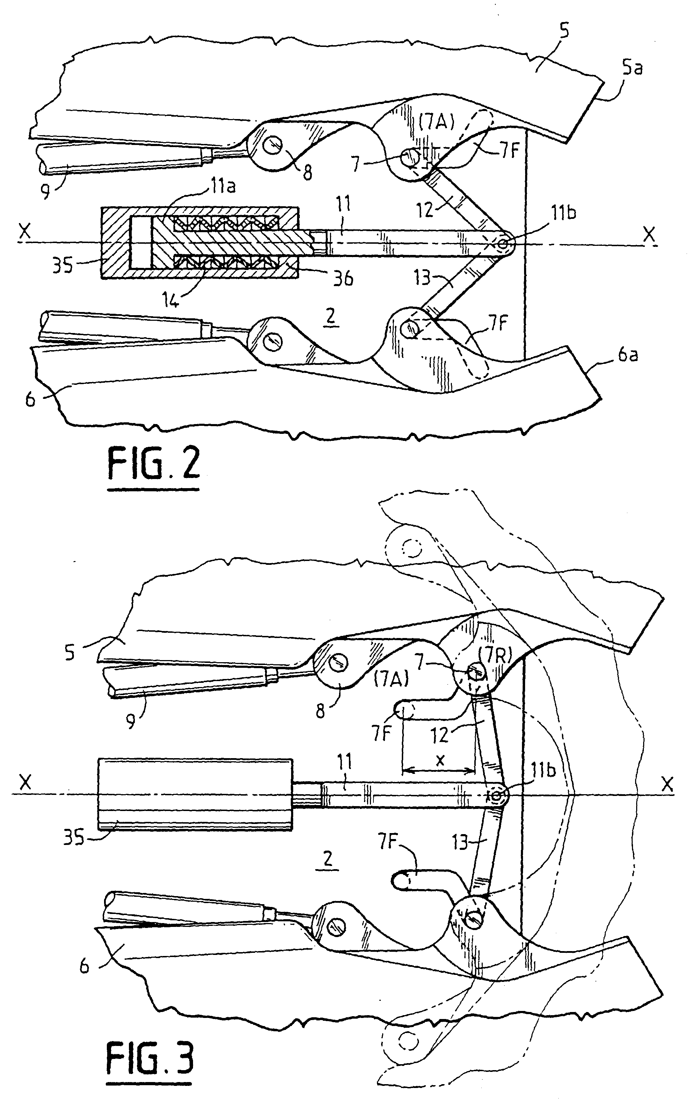

L'inverseur de poussée du moteur à réaction comporte deux portes d'inversion 5, 6 identiques, symétriques par rapport audit axe longitudinal X-X et montées chacune pivotantes autour d'un axe de pivotement P-P, défini par deux pivots transversaux 7 (voir les figures 2 et 3).

Chacune des portes 5, 6 est portée par deux ferrures de liaison 8, disposées au droit des coins arrière desdites portes, et articulées autour des pivots transversaux 7.

Les portes 5, 6 présentent en outre une face arrière 5a, 6a respectivement (voir les figures 2 et 3), s'étendant selon un plan oblique par rapport à l'axe longitudinal X-X du moteur et sont associées à des moyens de pivotement aptes à les faire pivoter entre deux positions extrêmes :
- une position repliée ou escamotée (montrée par les figures 2 et 3) dans laquelle les portes 5, 6 s'étendent dans le prolongement du carénage 3 du moteur M, de façon à se profiler extérieurement avec celui-ci et à former intérieurement, avec les flasques 2, la continuité de la tuyère 1. De plus, dans cette position escamotée, les faces arrière 5a, 6a des portes 5, 6 délimitent une découpe oblique, en forme de "gueule de poisson" ; et
- une position déployée (représentée sur la figure 1 et en traits mixtes sur la figure 3) dans laquelle les portes 5, 6 sont en butée l'une contre l'autre par leurs faces arrières 5a et 6a, et sont disposées de façon à intercepter et à inverser le jet gazeux sortant de la tuyère 1.

Les moyens de pivotement des portes 5, 6 comportent, au niveau de chaque flasque 2, au moins un vérin à double effet 4 disposé longitudinalement et des bielles 9, articulées sur le vérin 4 et chacune sur une ferrure de liaison 8. Le vérin 4 est alimenté en fluide hydraulique par une alimentation 4a pour le déploiement desdites portes et par une alimentation 4b pour la rétraction de celles-ci.

Les éléments décrits ci-dessus étant bien connus, il ne seront pas décrits plus en détail dans la présente description.

Conformément à la présente invention, chaque pivot transversal 7 porté par une porte d'inversion 5 ou 6 est logé dans une fente 7F prévue dans un flasque 2 en regard et s'étendant le long dudit axe longitudinal X-X, chaque pivot 7 pouvant coulisser dans la fente 7F associée à la manière d'un coulisseau dans une coulisse.

De plus, chaque couple pivot 7 - fente 7F est associé à un système d'arc-boutement 11-14, 35 avec butée à ressort agencé pour conférer deux positions stables 7A (position avancée) et 7R (position reculée) aux pivots transversaux 7.

Dans leur position stable avancée 7A, les deux pivots 7 d'une porte 5, 6 sont en appui contre l'extrémité avant des deux fentes 7F associées (voir la figure 2) et ils définissent la position avancée stable de l'axe de pivotement P-P correspondant.

De même, dans leur position stable reculée 7R, les deux pivots 7 d'une porte 5, 6 sont en appui contre l'extrémité arrière des deux fentes 7F associées (voir la figure 3) et ils définissent la position arrière stable de l'axe de pivotement P-P correspondant (telle que représentée sur la figure 1).

Le système d'arc-boutement 11-14, 35 comporte une tige 11 qui s'étend coaxialement à l'axe longitudinal X-X et sur l'extrémité arrière de laquelle sont articulées (en 11b) deux biellettes 12, 13, portant chacune un pivot 7 à leur extrémité opposée à la tige 11, l'un desdits pivots 7 (celui porté par la biellette 12) correspondant à la porte 5 et l'autre (celui porté par la biellette 13) à la porte 6.

A son extrémité avant, la tige 11 comporte une tête 11a logée dans un corps cylindrique 35 doté d'une paroi arrière 36 percée d'un orifice au travers duquel passe ladite tige. Le corps cylindrique 35 renferme, en outre, une butée à ressort 14 constituée par exemple d'un empilement de rondelles Belleville traversées par ladite tige 11 et agencée pour que la tête 11a de la tige 11 se trouve élastiquement écartée de la paroi arrière 36.

Comme le montrent les figures 2 et 3, les biellettes 12, 13 et l'agencement de la butée à ressort 14 sont adaptés pour que lesdites biellettes puissent prendre deux positions distinctes d'arc-boutement entre lesquelles les pivots 7 subissent un déplacement dans les fentes 7F, d'une extrémité à l'autre de celles-ci, provoquant un déplacement longitudinal des portes 5, 6, comme on peut le voir en comparant les figures 2 et 3.

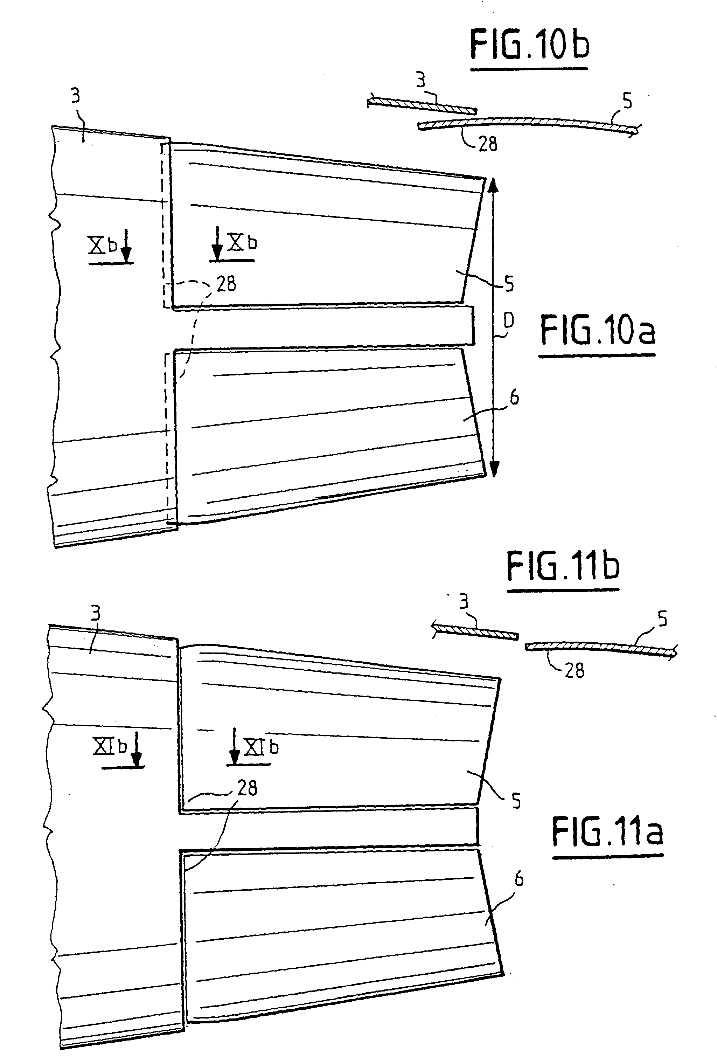

Sur ces figures, on peut voir que chaque pivot 7, en étant guidé par la fente 7F associée, se déplace le long de l'axe X-X d'une distance x entre sa position avancée 7A et sa position reculée 7R et inversement. Cette distance x est de l'ordre de 1% à 2% du diamètre D de l'orifice de sortie du moteur (voir figure 10a).

Par ailleurs, l'inverseur de poussée comporte des moyens de butée radiale aptes à interdire le déploiement des portes 5, 6 dans la position avancée 7A des pivots (figure 2), et à autoriser ce déploiement dans la position reculée 7R desdits pivots (figure 3). De ces moyens de butée radiale, seuls sont représentés schématiquement sur la figure 1, des éléments de butée 16 portés par les bords avant des portes 5, 6 et agencés pour venir coopérer avec des éléments complémentaires (non représentés) portés par le moteur M.

Lorsque lesdites portes 5, 6 doivent être déployées et qu'un tel déploiement est autorisé par les conditions de vol de l'aéronef, les vérins 4 cassent l'arc-boutement arrière des biellettes 12, 13 par compression de la butée à ressort 14, ce qui entraîne un recul des portes 5, 6.

Le maintien des portes 5, 6 dans cette position reculée permettant le déploiement des portes 5, 6 (voir la figure 3) se trouve alors assuré par l'arc-boutement avant des biellettes 12, 13 obtenu de façon automatique lors du passage des pivots 7 de leurs position avancée 7A à leur position reculée 7R.

Après que les portes 5, 6 ont été déployées, la rétraction des vérins 4 permet de les replier.

En fin de repliement, sous l'effet de la traction des vérins 4, les biellettes 12, 13 reviennent en position d'arc-boutement arrière permettant aux portes 5, 6 d'être ramenées vers leur position avancée stable, tandis que les pivots 7 passent de la position reculée 7R à la position avancée 7A.

On voit ainsi que, grâce à la présente invention, les portes sont maintenues dans leur position avancée (de sécurité) par le système d'arc-boutement élastique 11-14, 35. Elles ne peuvent se déployer que lorsque les vérins reçoivent l'ordre de pousser, et lesdits vérins sont dimensionnés pour pouvoir vaincre cet arc-boutement avec une marge raisonnable.

Dans le mode de réalisation de l'invention illustré par les figures 2 et 3, chaque fente 7F formant coulisse présente une forme coudée, la portion avant d'une fente 7F, qui correspond à la position avancée 7A des pivots 7, étant la portion de cette fente la plus proche de l'axe longitudinal X-X du moteur.

Ainsi, en position reculée 7R des pivots 7, l'axe de pivotement P-P est plus éloigné dudit axe longitudinal X-X du moteur qu'en position avancée 7A, ce qui favorise l'agencement des flasques 2 et des éléments qu'ils portent en aménageant au mieux la cinématique des portes 5 et 6.

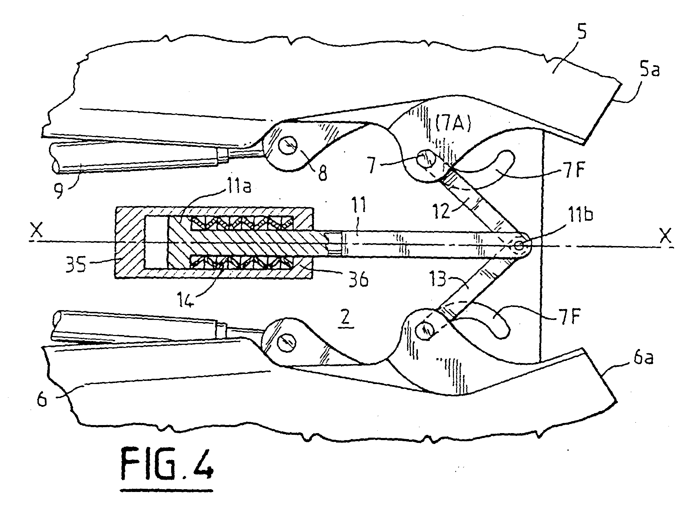

Dans la variante de réalisation de la figure 4, chaque fente 7F formant coulisse présente la forme au moins approximative d'un arc de cercle, dont les positions d'extrémité et notamment la portion avant (correspondant à la position avant 7A des pivots 7) sont plus éloignées dudit axe longitudinal X-X du moteur que la portion centrale dudit arc de cercle.

Ainsi, en position avancée escamotée d'une porte, la coopération desdits pivots 7 avec les portions avant des fentes 7F, associée à l'action centrifuge des forces de pression sur ladite porte, verrouille l'axe de pivotement P-P correspondant dans sa position avancée. On remarquera que le verrouillage est d'autant plus grand que lesdites forces de pression sont plus importantes, c'est-à-dire que le régime moteur est plus élevé, de sorte qu'il n'est pas nécessaire de prévoir des moyens de protection contre le recul de ladite porte.

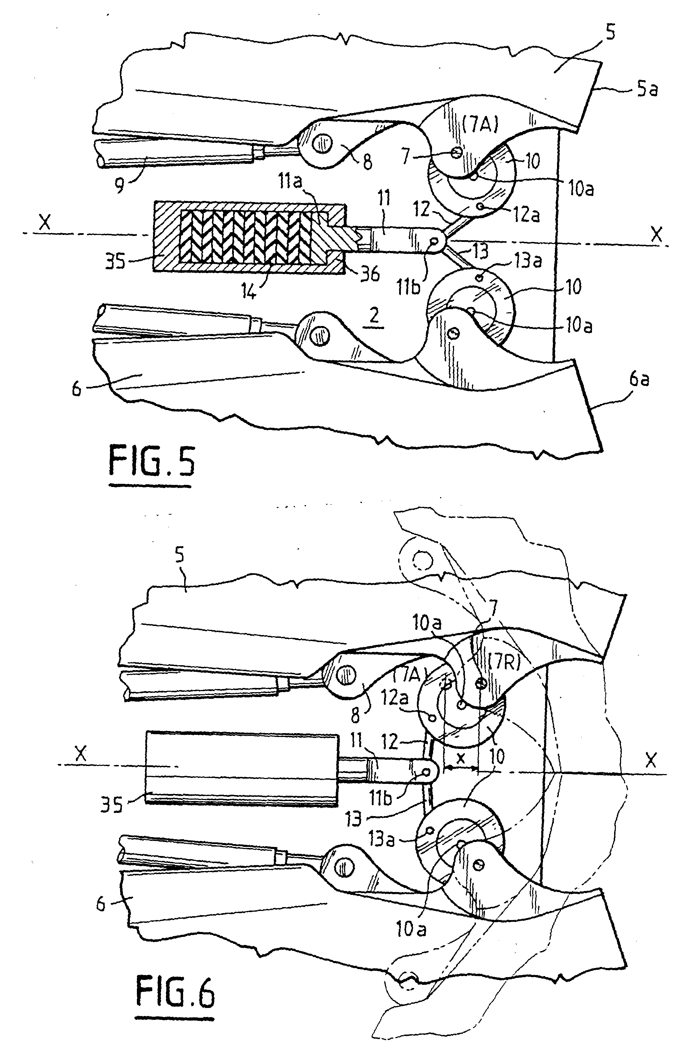

Dans la variante de réalisation de la présente invention illustrée schématiquement par les figures 5 et 6, chaque pivot transversal 7 est monté de façon excentrée sur un porte-pivot rotatif 10, par exemple en forme de disque, porté par un axe de rotation 10a solidaire d'un flasque 2, de façon à pouvoir être déplacé longitudinalement le long d'un secteur circulaire, lors du déploiement ou du retrait du vérin 4.

De plus, chaque disque 10 est associé à un système d'arc-boutement 11-14, 35 avec butée à ressort agencé pour conférer deux positions stables aux disques 10, et par conséquent, deux positions stables 7A (position avancée) et 7R (position reculée) aux pivots transversaux 7 et donc aux axes de pivotement P-P.

Ce système d'arc-boutement comporte une tige 11 qui s'étend coaxialement à l'axe longitudinal X-X et sur l'extrémité arrière de laquelle sont articulées (en 11b) deux biellettes 12, 13, elles-mêmes articulées respectivement sur les disques 10 associés respectivement aux portes 5 et 6, de façon à permettre de déplacer simultanément lesdites portes.

A son extrémité avant, la tige 11 comporte une tête 11a logée dans un corps cylindrique 35 dotée d'une paroi frontale arrière 36 percée d'un orifice au travers duquel passe ladite tige. Le corps cylindrique 35 renferme, en outre, une butée à ressort 14 constituée par exemple d'un empilement de rondelles Belleville, agencée pour que la tête 11a de la tige 11 se trouve positionnée entre une butée avant élastique, constituée par cette butée à ressort 14, et une butée arrière fixe, constituée par la paroi frontale arrière 36 du corps cylindrique 35.

Comme le montrent les figures 5 et 6, les points d'articulation 12a, 13a des biellettes 12, 13 sur les disques 10 et l'agencement de la butée à ressort 14 sont adaptés pour que lesdites biellettes prennent deux positions distinctes d'arc-boutement entre lesquelles les disques 10 subissent une rotation de l'ordre de un quart à un tiers de cercle provoquant un déplacement longitudinal des portes 5, 6, comme on peut le voir en comparant les figures 5 et 6.

Sur ces figures, on peut voir que chaque pivot 7 se déplace, le long de l'axe X-X, d'une distance x entre sa position avancée 7A et sa position reculée 7R et inversement.

L'inverseur de poussée comporte, en outre, des moyens de butée radiale aptes à interdire le déploiement des portes 5, 6 dans la position avancée 7A des pivots (figures 2, 4 et 5), et à autoriser ce déploiement dans la position reculée 7R desdits pivots (figure 6).

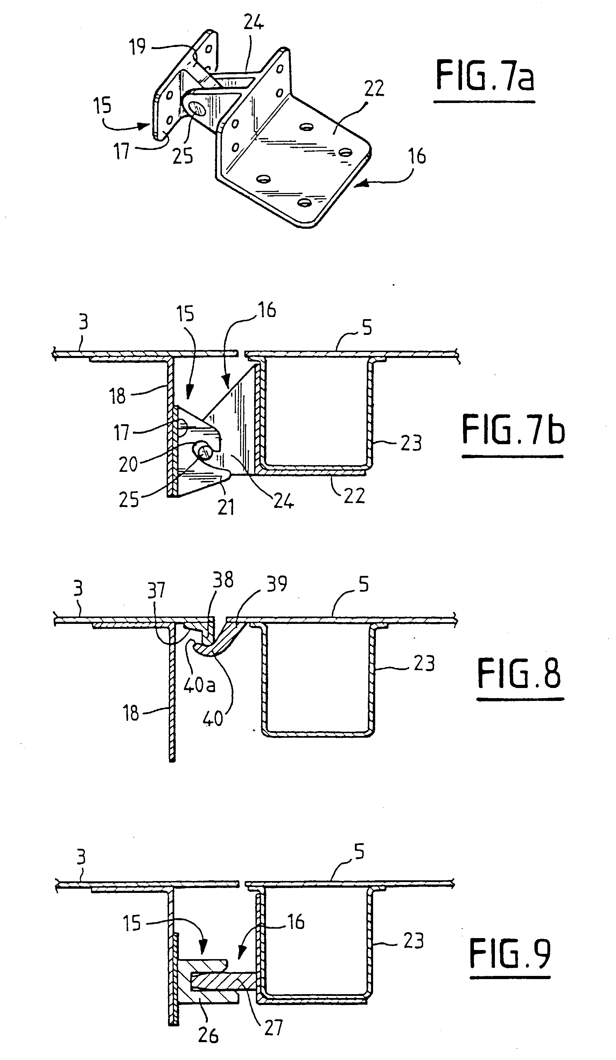

Comme le montrent les figures 7a et 7b, ces moyens de butée peuvent comprendre des éléments 15 formant réceptacle, destinés à être solidarisés sur la partie amont fixe 3 de la tuyère 1, et des éléments de butée 16, agencés pour venir s'engager dans les réceptacles 15 et destinés à être solidarisés sur l'extrémité avant des portes 5 ou 6.

Les éléments 15 formant réceptacle comprennent une platine 17 agencée pour être solidarisée sur un cadre en forme d'équerre 18 de renfort de la partie amont de la tuyère 1. Cette platine 17 porte, en outre, une paroi réceptacle 19 orthogonale à ladite platine, dotée d'une encoche 20, inclinée vers le haut et délimitée frontalement par une face interne supérieure inclinée.

En outre, cette paroi réceptacle 19 forme, dans la continuité inférieure de l'encoche 20, un appendice 21 s'étendant dans le prolongement arrière de ladite paroi et comportant une face supérieure agencée pour servir de butée basse à un élément de butée radiale 16 solidaire d'une porte 5, 6 en fin de repliement de cette dernière, de façon à permettre de casser l'arc-boutement arrière des biellettes 12, 13.

Les éléments de butée 16 comprennent une plaque de support 22 en forme d'équerre agencée pour être solidarisée sur un cadre 23, en forme de U, de renfort de l'extrémité avant des portes 5 ou 6. Cette plaque de support 22 porte une chape 24 s'étendant orthogonalement par rapport à une de ses ailes, logeant un pion transversal 25 agencé pour pénétrer avec jeu dans l'encoche 20 d'un élément réceptacle 15.

Comme illustré schématiquement sur la figure 1, une pluralité de tels moyens 15, 16 peut être répartie à la circonférence de l'extrémité amont 3 de la tuyère 1 et de l'extrémité avant des portes 5, 6 de façon à obtenir une répartition correcte des efforts.

Du fait de la forme de l'encoche 20, de tels moyens de butée sont adaptés pour engendrer, lorsque les pions 25 sont logés dans les encoches 20, une réaction comportant une composante longitudinale tendant à s'opposer à tout recul des portes 5, 6, même en cas de tentative de déploiement du vérin central, et ce tant que les forces aérodynamiques agissant sur ces portes sont supérieures à un seuil donné représentatif d'une phase d'atterrissage de l'avion.

Une fois les forces aérodynamiques en-deçà de ce seuil, le déploiement du vérin central permet de casser l'arc-boutement arrière des biellettes 12, 13 par action sur la butée à ressort 14, entraînant un recul des portes 5, 6.

Le maintien des portes 5, 6 dans cette position reculée permettant le repliement ultérieur des portes 5, 6 se trouve alors assuré par l'arc-boutement avant des biellettes 12, 13 obtenu de façon automatique lors de la rotation des disques 10.

En fin de repliement, en outre, et tel qu'indiqué ci-dessus, les biellettes 12, 13 reviennent en position d'arc-boutement arrière permettant aux portes 5, 6 d'être ramenées vers leur position avancée, grâce à l'appendice 21 de l'élément de butée radiale.

La figure 8 représente un autre mode de réalisation visant une variante de moyens de butée radiale dont l'objectif est le même que celui des moyens de butée radiale décrits ci-dessus, à savoir interdire le recul des portes 5, 6 en dehors de conditions spécifiques correspondant à la phase d'atterrissage.

Ces moyens de butée radiale sont dans ce cas, non pas portés par des ferrures, telles que les ferrures 17, 22 décrites ci-dessus, mais par des bandes de renfort 37, 39 solidaires respectivement de l'extrémité arrière de la partie amont fixe, et de l'extrémité avant des portes 5, 6.

On notera qu'il n'est pas nécessaire que ces bandes de renfort 37, 39 s'étendent sur la totalité de la périphérie des portes 5, 6 et qu'il suffit, en général, de les disposer sur un secteur de vingt à trente degrés de part et d'autre du plan de symétrie desdites portes.

Les moyens de butée radiale portés par ces bandes de renfort 37, 39 présentent la forme générale de crochets 39, 40 dotés de surfaces de coopération inclinées par rapport à l'horizontale, adaptées pour créer une réaction comportant une composante longitudinale tendant à s'opposer à tout recul des portes 5, 6.

De plus, le crochet 40 solidaire des portes 5, 6 présente une face frontale chanfreinée 40a permettant l'engagement de ce crochet avec le crochet 39 en vis-à-vis lors de l'avancée des portes 5, 6.

Avec de tels moyens de butée radiale, la rupture de l'arc-boutement arrière des biellettes 12, 13 est obtenue par tout moyen de butée connu en soi utilisé pour limiter la rotation des portes 5, 6 lors de leur repliement.

La figure 9 montre une variante selon laquelle les moyens de butée radiale engendrent une simple réaction orthogonale à l'axe longitudinal X-X, selon laquelle soit la force à exercer par les arcs-boutements doit être suffisante pour garantir un positionnement stable en position avancée des portes 5, 6, soit des moyens de verrouillage annexes doivent être prévus.

Selon cette variante, les éléments formant réceptacle 15 comportent, en lieu et place de la paroi réceptacle 19, un manchon longitudinal 26, et les éléments de butée 16 comportent un doigt longitudinal 27 apte à venir s'engager axialement dans le manchon 26.

Les figures 10a, 10b, 11a et 11b représentent une autre variante selon laquelle la réaction engendrée par les moyens de butée est également strictement orthogonale à l'axe longitudinal X-X.

Telles que représentées sur ces figures, les portes 5, 6 présentent un bord avant 28 s'infléchissant en direction de l'axe du moteur, de façon à venir s'engager, au moins en partie, sous le bord amont 3 de la tuyère 1, dans la position avancée desdites portes 5, 6.

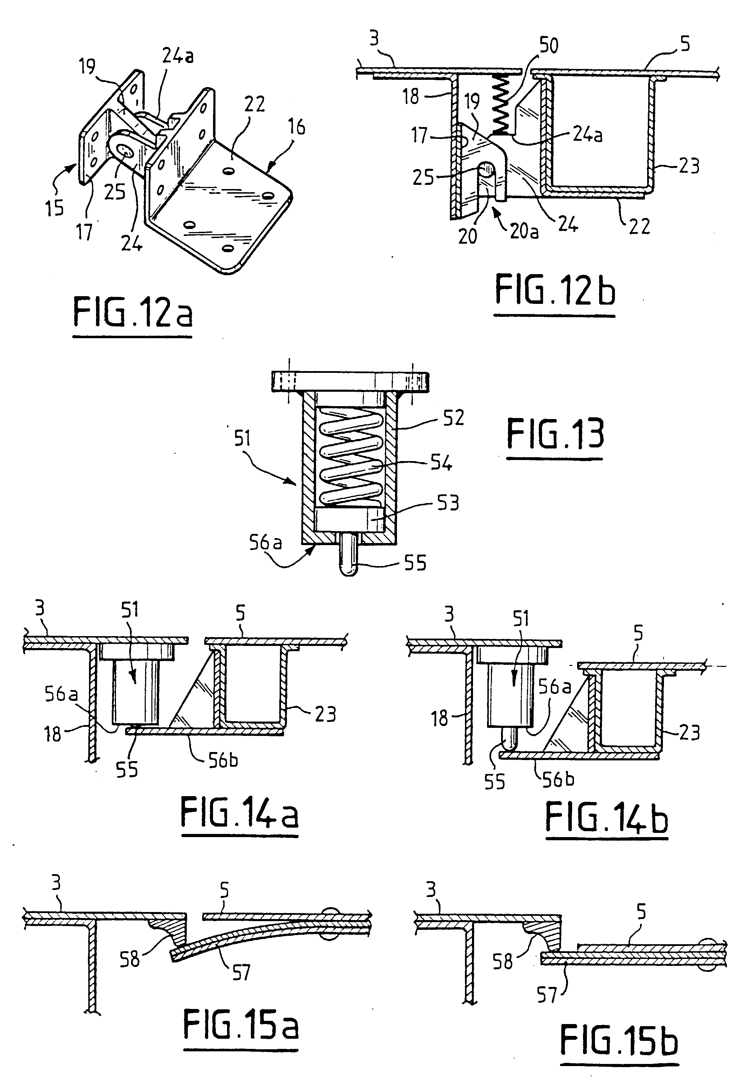

Sur les figures 12a et 12b, on a représenté encore une autre variante de réalisation desdits moyens de butée radiale 15, 16 proche de la réalisation décrite en regard des figures 7a et 7b. Cependant, dans ce cas, la chape 24 est conformée pour comporter un siège 24a pour un ressort 50 (à lame, à boudin ou autre), prenant appui sur la tuyère 1 pour presser ladite porte 5 ou 6 en direction de l'axe X-X, c'est-à-dire pour tendre à surescamoter ladite porte.

Du fait de la forme des encoches 20, les moyens de butée 16 s'opposent, lorsque les pions 25 sont logés dans lesdites encoches 20, à tout recul des portes 5 et 6, même en cas de tentative de déploiement des vérins, et ce tant que les forces aérodynamiques agissant sur ces portes sont supérieures aux forces exercées par les ressorts 50.

Lorsque ces forces aérodynamiques deviennent inférieures aux forces exercées par les ressorts 50, ceux-ci surescamotent les portes 5, 6, de sorte que les pions 25 sortent des encoches 20. Les portes restent alors dans leur position stable surescamotée, jusqu'à ce que les vérins 4 reçoivent l'ordre de déploiement. La poussée des vérins 4 permet alors de casser l'arc-boutement arrière des biellettes 12, 13 à l'encontre de l'action de la butée à ressort 14, ce qui permet le recul des portes 5, 6.

Le maintien des portes 5, 6 dans cette position reculée permettant le déploiement des portes 5, 6 (voir la figure 3) se trouve alors assuré par l'arc-boutement avant des biellettes 12, 13 obtenu de façon automatique par le déplacement des pivots 7.

Après que les portes 5, 6 ont été déployées, la rétraction des vérins 4 permet de les replier jusqu'au surescamotage.

En fin de repliement, sous l'effet de la traction continue des vérins 4, les biellettes 12, 13 reviennent en position d'arc-boutement arrière permettant aux portes 5, 6 surescamotées d'être ramenées vers leur position avancée stable, tandis que les pivots 7 passent de la position reculée 7R à la position avancée 7A.

Les pions 25 des portes 5, 6 surescamotées sont alors positionnés sous l'entrée 20a des encoches 20. Lorsque la pression hydraulique est coupée, les portes 5, 6 demeurent dans cette position avancée stable et repasseront du surescamotage à l'escamotage, les pions 25 s'engageant dans les encoches 20, dès que les forces aérodynamiques agissant sur lesdites portes 5, 6 seront supérieures aux forces exercées par les ressorts 50. On se retrouve alors dans la position illustrée par la figure 2.

On voit ainsi que, grâce à la présente invention, les portes 5, 6 demeurent mécaniquement verrouillées pour toutes les conditions de vol conduisant à une différence de pression agissant sur les portes supérieure à un seuil déterminé par les ressorts 50 et choisi pour correspondre à un régime du moteur proche du ralenti et à une vitesse de l'avion peu supérieure à la vitesse d'approche. Ce verrouillage mécanique interdit tout déplacement de l'inverseur, même en cas d'un ordre de déploiement accidentel ou délibéré.

On remarquera de plus que le surescamotage permettant le déverrouillage des portes repliées ne résulte pas d'une action des vérins de commande 4 des portes. Il se produit automatiquement sous l'action des ressorts 50, dès que la différence de pression agissant sur les portes 5, 6 tombe en dessous du seuil choisi, déterminé par lesdits ressorts 50.

Les portes sont alors maintenues dans leur position avancée (de sécurité) par le système d'arc-boutement élastique 11-14, 35. Elle ne peuvent se déployer que lorsque les vérins reçoivent l'ordre de pousser, et lesdits vérins sont dimensionnés pour pouvoir vaincre cet arc-boutement avec une marge raisonnable (les forces aérodynamiques agissant sur les portes suffiraient à conduire au plein déploiement, dès que l'arc-boutement est cassé).

Sur la figure 12b, on a supposé que les moyens élastiques 50 étaient des ressorts à boudin, respectivement intégrés à un élément de butée 16. Dans la variante de réalisation illustrée par les figures 13, 14a et 14b, les moyens élastiques 50 sont réalisés sous la forme de pistons à ressort 51, indépendants des butées 15, 16. Chaque piston à ressort 51 comporte un cylindre 52, susceptible d'être fixé au moteur et enfermant un piston 53, poussé par un ressort 54 et pourvu d'un doigt 55, faisant saillie à l'extérieur du cylindre 52 par rapport à une face d'extrémité 56a de celui-ci. Par ailleurs, à la partie avant des portes 5, 6, sont prévus des appuis 56b (portés par exemple par le cadre 23) susceptibles de coopérer avec les pistons à ressort 51. Ces appuis 56b sont soit au contact de la face d'extrémité 56a (position escamotée de la figure 14a), soit repoussés par les doigts 55 (position surescamotée de la figure 14b).

Les figures 15a et 15b montrent, respectivement en position escamotée et en position surescamotée, une variante des moyens élastiques 50, dans laquelle ceux-ci sont réalisés sous la forme de ressorts à lame 57 fixés à la partie avant des portes 5, 6 et coopérant avec des appuis 58 portés par le moteur.

Par ailleurs, les deux positions stables, avancée 7A et reculée 7R, des pivots 7 peuvent demander des forces de stabilisation différentes.

Par exemple, pour un moteur de poussée au sol de l'ordre de 2500 daN pourvu d'une tuyère dont le diamètre de sortie est égal à 0,6 m environ, la force exercée sur chacun des deux pivots 7 d'une porte 5, 6 en position surescamotée (pivots 7 en position avancée 7A) est de l'ordre de 50 daN, lorsque la pression de tuyère est au seuil critique (P approximativement égale à 0,05 hbar).

En revanche, pour le même moteur, lorsqu'une porte 5, 6 est en position déployée (pivots 7 en position reculée), la réaction sur chaque pivot 7 peut atteindre une valeur très supérieure, de l'ordre de 250 daN, au moment de l'escamotage sous l'action du ou des vérins principaux tirant les bielles 9.

Une réaction aussi importante risque, par exemple dans le mode de réalisation des figures 5 et 6, de faire tourner le porte-pivot 10, en comprimant excessivement la butée à ressort 14, bien qu'alors l'angle des biellettes 12, 13 soit très ouvert (voir la figure 6), ce qui durcit ladite butée.

Aussi, selon une particularité importante de la présente invention, on prévoit des moyens pour durcir encore plus ladite butée à ressort 14 pendant l'escamotage des portes 5, 6.

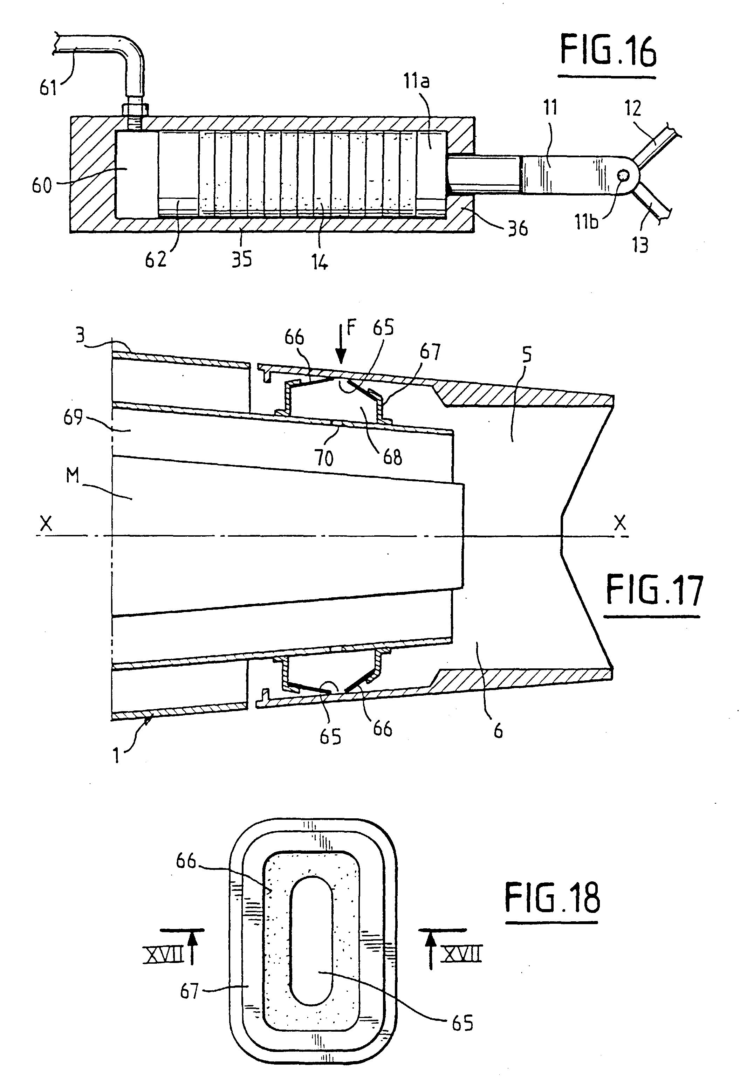

A cet effet, comme le montre la figure 16, le corps cylindrique 35 du système d'arc-boutement 11-14, 35 comporte, du côté opposé à la tige 11 une chambre de vérin 60 dans laquelle débouche une conduite hydraulique 61, alimentée en fluide hydraulique par une dérivation de la canalisation hydraulique d'escamotage 4b des vérins 4 actionnant les bielles 9. Dans la chambre de vérin 60, entre la conduite hydraulique 61 et la butée élastique 14, est monté un piston hydraulique 62 subissant la pression du liquide hydraulique présent dans la chambre de vérin 60.

On comprendra aisément que, lorsque les vérins 4 sont commandés à l'escamotage des portes 5 et 6, la pression du fluide hydraulique de la chambre de vérin 60 est élevée (elle correspond à la pression nécessaire à l'escamotage), de sorte que le piston 62 est fortement pressé contre la butée élastique 14, qui, elle, presse fortement la tête de piston lla de la tige 11. On obtient ainsi le durcissement de la butée élastique 14.

De ce qui a été décrit ci-dessus, il ressort que le fonctionnement de l'inverseur de poussée conforme à la présente invention met à profit la poussée exercée par le moteur sur la face interne des portes, en position repliée. Or, il peut se faire que pour certains moteurs ou pour certaines structures d'inverseurs de poussée (par exemple celles dans lesquelles les portes d'inversion sont disposées autour et en arrière de la tuyère), lesdites portes ne soient soumises de la part du moteur qu'à une pression peu différente de la pression ambiante. Aussi, selon une autre caractéristique importante de la présente invention, pour pouvoir mettre en oeuvre cette dernière, même dans le cas où les portes d'inversion ne sont pas soumises naturellement à des forces de pression suffisantes, on crée artificiellement, sur la face interne desdites portes, des zones pressurisées par les gaz d'échappement partiellement détendus dudit moteur.

Par exemple, sur la figure 17, on a représenté un moteur à double flux, sur la tuyère 1 duquel les portes d'inversion 5 et 6 sont disposées autour et en arrière de ladite tuyère 1. Il en résulte qu'entre lesdites portes 5 et 6 la pression est voisine de la pression ambiante. Aussi (voir également la figure 18 qui est une vue selon la flèche F de la figure 17, la porte 5 étant supposée ôtée), sur la face interne des portes 5 et 6, on a formé des zones pressurisées 65 délimitées par des joints d'étanchéité fermés 66, s'appuyant élastiquement par leur périphérie interne sur lesdites faces internes.

Les périphéries externes des joints 66 sont solidaires de montures 67, délimitant sous lesdits joints 66 des enceintes 68. Sur la figure 17, les enceintes 68 correspondent à des coupes selon la ligne XVII-XVII de la figure 18.

Dans l'exemple de réalisation représenté sur la figure 17, les enceintes 68, fixées sur la tuyère 1, sont mises à la pression du canal de flux froid 69 par des ajutages calibrés 70. Ainsi, les zones 65 sont portées à la pression des gaz froids, partiellement détendus, de la partie amont de la tuyère.

Eventuellement, une pression amont légèrement plus élevée pourrait être amenée dans les enceintes 68 par un tube fixé le long du canal de flux froid 69, au lieu d'être introduite dans lesdites enceintes par les ajutages calibrés 70.

## Revendications

1. Inverseur de poussée pour moteur à réaction (M) d'aéronef, comportant :
- au moins une porte (5, 6) dont l'extrémité arrière est montée pivotante par rapport audit moteur, autour d'un axe de pivotement (P-P) transversal à l'axe longitudinal (X-X) dudit moteur ;
- des moyens (4, 9) pour faire pivoter chaque porte (5, 6), autour dudit axe de pivotement (P-P), entre :
. une position extrême escamotée, dans laquelle ladite porte est repliée avec son extrémité avant dirigée vers ledit moteur ; et
. une position extrême déployée, dans laquelle ladite porte est disposée au moins sensiblement transversalement audit axe longitudinal (X-X) du moteur, avec son extrémité avant écartée de celui-ci ; et
- des moyens (4, 9, 7, 7F, 10) pour déplacer ledit axe de pivotement (P-P) le long dudit axe longitudinal (X-X) du moteur, entre une position avancée et une position reculée et réciproquement,
caractérisé :
- en ce qu'il comporte des moyens de butée radiale comportant des éléments (16, 28) solidaires de l'extrémité avant de chaque porte (5, 6) et susceptibles de coopérer avec des éléments conjugués (15, 3) solidaires dudit moteur ;
- et en ce que lesdits moyens de butée radiale sont adaptés pour interdire le déploiement de ladite porte dans la position avancée dudit axe de pivotement (P-P) et pour autoriser ce déploiement dans la position reculée dudit axe de pivotement.

2. Inverseur de poussée selon la revendication 1,
caractérisé en ce que la distance (x) séparant lesdites positions avancée et reculée le long de l'axe longitudinal (X-X) du moteur est de l'ordre de 1% à 2% du diamètre (D) de l'orifice de sortie du moteur.

3. Inverseur de poussée selon l'une des revendications 1 ou 2,
caractérisé en ce que lesdits moyens (4, 9) de déplacement dudit axe de pivotement (P-P) sont formés par les moyens de pivotement (4, 9) de ladite porte (5, 6).

4. Inverseur de poussée selon l'une des revendications 1 à 3,
caractérisé en ce que lesdits moyens (4, 9) de déplacement dudit axe de pivotement (P-P) le long dudit axe longitudinal (X-X) du moteur comportent des moyens de guidage à coulisses (7F) et coulisseaux (7).

5. Inverseur de poussée selon la revendication 1,
caractérisé en ce que, à chaque porte (5, 6), sont associés deux coulisseaux (7) et deux coulisses (7F), lesdits coulisseaux définissant ledit axe de pivotement (P-P) et la position dudit axe de pivotement le long dudit axe longitudinal (X-X) du moteur étant définie par la position relative de chaque coulisseau dans chaque coulisse.

6. Inverseur de poussée selon la revendication 5,
caractérisé en ce que lesdits coulisseaux (7) sont solidaires de ladite porte (5, 6), tandis que lesdites coulisses (7F) sont prévues sur ledit moteur.

7. Inverseur de poussée selon l'une des revendications 1 à 6,
caractérisé en ce que, en position reculée, ledit axe de pivotement (P-P) est plus éloigné dudit axe longitudinal (X-X) du moteur qu'en position avancée et en ce que lesdits moyens (4, 9, 7, 7F, 10) de déplacement dudit axe de pivotement (P-P) le long dudit axe longitudinal (X-X) du moteur sont aptes à écarter ledit axe de pivotement (P-P) dudit axe longitudinal (X-X) du moteur lorsque ledit axe de pivotement (P-P) passe de sa position avancée à sa position reculée et, inversement, à rapprocher ledit axe de pivotement (P-P) dudit axe longitudinal (X-X) du moteur lorsque ledit axe de pivotement (P-P) passe de sa position reculée à sa position avancée.

8. Inverseur de poussée selon la revendication 7 et l'une des revendications 4 à 6,
caractérisé en ce que lesdites coulisses (7F) présentent une forme coudée ou arquée, la portion avant desdites coulisses étant la portion la plus proche dudit axe horizontal (X-X).

9. Inverseur de poussée selon l'une des revendications 4 à 6, dans lequel ladite porte (5, 6) est soumise, de la part dudit moteur (M), à des forces de pression agissant dans le sens du déploiement,
caractérisé en ce que lesdites coulisses (7F) ont une forme telle que, en position extrême escamotée de ladite porte et en position avancée dudit axe de pivotement (P-P), la coopération desdits coulisseaux (7) avec lesdites coulisses (7F), associée à l'action desdites forces de pression sur ladite porte, verrouille ledit axe de pivotement (P-P) dans sa position avancée.

10. Inverseur de poussée selon la revendication 9,
caractérisé en ce que lesdites coulisses (7F) présentent la forme d'un arc, dont la portion avant est plus éloignée dudit axe longitudinal (X-X) du moteur que la portion centrale dudit arc.

11. Inverseur de poussée selon l'une des revendications 1, 2, 3 ou 7,
caractérisé en ce que lesdits moyens (4, 9) de déplacement dudit axe de pivotement (P-P) le long dudit axe longitudinal (X-X) du moteur (M) comportent, pour chaque porte, deux porte-pivots rotatifs (10) portés chacun par un axe de rotation (10a) solidaire du moteur et portant chacun un pivot excentré (7), les deux pivots étant alignés pour définir ledit axe de pivotement (P-P).

12. Inverseur de poussée selon l'une quelconque des revendications 1 à 11,
caractérisé en ce qu'il comporte un système d'arc-boutement (11, 12, 13) sollicité par des moyens de butée élastique (14), adapté, d'une part, pour conférer audit axe de pivotement (P-P) deux positions stables correspondant respectivement auxdites positions avancée et reculée et, d'autre part, pour permettre un changement de position dudit axe de pivotement (P-P) sous l'effet d'un effort supérieur à un seuil déterminé par lesdits moyens de butée élastique (14).

13. Inverseur de poussée selon la revendication 12, dans lequel ledit axe de pivotement (P-P) est défini par deux pivots (7) alignés, respectivement disposés de part et d'autre de ladite porte,
caractérisé en ce que ledit système d'arc-boutement comporte, pour chaque pivot (7), une biellette (12, 13) reliée audit pivot à une de ses extrémités, et articulée, à son autre extrémité, sur une tige (11) apte à se déplacer axialement selon un axe parallèle à l'axe longitudinal (X-X) du moteur, ladite tige étant sollicitée par une butée à ressort (14) apte à s'opposer à son déplacement axial.

14. Inverseur de poussée selon la revendication 13, comportant deux portes (5, 6) opposées et symétriques par rapport audit axe longitudinal (X-X) du moteur,
caractérisé en ce que, pour chaque couple de pivots (7) disposés l'un en regard de l'autre et associés respectivement à l'une et à l'autre des deux portes opposées (5, 6), ledit système d'arc-boutement comprend une tige (11) s'étendant sensiblement dans le plan du symétrie du moteur, et deux biellettes (12, 13) symétriques articulées chacune à ladite tige (11) et reliés respectivement à l'un desdits pivots (7).

15. Inverseur de poussée selon l'une quelconque des revendications 1 à 14,
caractérisé en ce que lesdits moyens de butée radiale sont formés, d'une part, par le bord avant (28) de ladite porte (5, 6) et, d'autre part, par le bord arrière de la partie amont (3) dudit moteur (M), ledit bord avant de la porte étant apte à s'engager au moins localement sous ledit bord arrière de ladite partie amont du moteur.

16. Inverseur de poussée selon l'une quelconque des revendications 1 à 14,
caractérisé en ce que lesdits moyens de butée radiale sont formés, d'une part, par des pions (27) faisant saillie longitudinalement par rapport au bord avant de ladite porte (5, 6) et, d'autre part, par des logements (26) ménagés axialement relativement au bord arrière de la partie amont dudit moteur et aptes à loger chacun un pion (27).

17. Inverseur de poussée selon l'une quelconque des revendications 1 à 14,
caractérisé en ce que lesdits moyens de butée radiale sont formés, d'une part, par au moins un élément de butée (25 ; 40) solidaire de l'extrémité avant de ladite porte et, d'autre part, par autant de réceptacles (19, 20 ; 38) solidaires de la partie amont fixe (1, 2) et avec chacun desquels peut coopérer un élément de butée, lesdits éléments de butée et réceptacles ayant un profil de came adapté pour engendrer une réaction comportant une composante longitudinale apte à s'opposer au recul de la porte.

18. Inverseur de poussée selon la revendication 17,
caractérisé en ce que chaque réceptacle (19, 20) comporte, à l'avant du profil de came, une portion avant (34) de guidage de l'élément de butée correspondant (25) lors des déplacements de l'axe de pivotement (P-P) entre ses positions avancée et reculée, ladite portion de guidage étant adaptée pour amener un déplacement de l'élément de butée (25) selon une trajectoire sensiblement inclinée par rapport à l'axe longitudinal (X-X), de façon à engendrer un surescamotage de la porte (5, 6) lors d'un déplacement vers l'arrière dudit élément de butée.

19. Inverseur de poussée selon l'une des revendications 17 ou 18,
caractérisé en ce que chaque réceptacle (19, 20) est prolongé vers l'arrière par une face (21) de butée radiale parallèle à l'axe longitudinal (X-X) apte à servir de butée à l'élément de butée (25) correspondant lorsque la porte (5, 6) est amenée dans sa position repliée, de façon à faire basculer les systèmes d'arc-boutement (10-14).

20. Inverseur de poussée selon l'une quelconque des revendications 1 à 19, dans lequel ladite porte (5, 6) est soumise, de la part du moteur (M), à des forces de pression dans le sens du déploiement,
caractérisé :
- en ce que, en position escamotée, chaque porte (5, 6) est soumise à l'action de moyens élastiques (50) dans le sens du surescamotage de ladite porte ; et
- en ce que ledit inverseur comporte des moyens anti-recul (19, 20, 25) qui interdisent le passage dudit axe de pivotement (P-P) de sa position avancée à sa position reculée, tant que les forces de pression exercées par ledit moteur (M) sur ladite porte dans le sens du déploiement sont supérieures à la force contraire exercée sur ladite porte par lesdits moyens élastiques (50).

21. Inverseur de poussée selon la revendication 20,
caractérisé en ce que lesdits moyens anti-recul (19, 20, 25) sont intégrés auxdits moyens de butée radiale.

22. Inverseur de poussée selon l'une des revendications 20 ou 21,
caractérisé en ce que lesdits moyens élastiques (50) sont intégrés auxdits moyens de butée radiale (15, 16).

23. Inverseur de poussée selon l'une des revendications 20 ou 21,
caractérisé en ce que lesdits moyens élastiques (50) sont indépendants desdits moyens de butée radiale (15, 16) et sont portés par l'extrémité avant de chaque porte (5, 6) ou par le moteur (1), lesdits moyens élastiques (50) coopérant avec des appuis (56, 58) portés par le moteur ou par l'extrémité avant de ladite porte (5, 6), respectivement.

24. Inverseur de poussée selon l'une des revendications 20 à 23,
caractérisé en ce que lesdits moyens élastiques (50) sont formés par des pistons à ressort (51).

25. Inverseur de poussée selon l'une des revendications 20 à 23,
caractérisé en ce que lesdits moyens élastiques (50) sont formés par des ressorts à lame (57).

26. Inverseur de poussée selon l'une des revendications 21 à 25,
caractérisé en ce que lesdits moyens de butée radiale (15, 16) comportent, pour chaque porte (5, 6), au moins un élément de butée (25) solidaire de l'extrémité avant de ladite porte et au moins un réceptacle (19, 20) solidaire dudit moteur (M), ledit réceptacle (19, 20) étant ouvert en regard de l'axe (X-X) dudit moteur et la coopération dudit élément de butée (25) et dudit réceptacle (19, 20) s'opposant au recul dudit axe de pivotement (P-P) de sa position avancée à sa position reculée, lorsque la porte correspondante est en position escamotée.

27. Inverseur de poussée selon l'une des revendications 12 à 26,
caractérisé en ce qu'il comporte des moyens (60-62) de durcissement desdits moyens de butée élastique (14), lors de la rétraction de ladite porte (5, 6) de sa position déployée à sa position escamotée, ledit axe de pivotement (P-P) étant alors en position reculée.

28. Inverseur de poussée selon la revendication 27,
caractérisé en ce que lesdits moyens de durcissement (60-62) sont hydrauliques.

29. Inverseur de poussée selon l'une quelconque des revendications 1 à 28, dans lequel ladite porte (5, 6) n'est pas soumise spontanément à des forces de pression notables par ledit moteur (M),
caractérisé en ce qu'il comporte au moins une enceinte pressurisée (68), recevant des gaz d'échappement à basse pression dudit moteur (M) et pourvue d'un joint souple (66) qui, lorsque ladite porte (5, 6) est escamotée, s'applique avec étanchéité contre la face interne de ladite porte en y délimitant une zone pressurisée (65) d'aire précise.

30. Moteur à réaction pour aéronef,
caractérisé en ce qu'il comporte un inverseur de poussée tel que spécifié sous l'une quelconque des revendications 1 à 29.

## Patentansprüche

1. Schubumkehrvorrichtung für Düsentriebwerke (M) von Luftfahrzeugen, mit:
- wenigstens einer Klappe (5, 6), deren hinteres Ende in Bezug auf das Triebwerk um eine zur Längsachse (X-X) des Triebwerks transversale Drehachse (P-P) schwenkbar befestigt ist;
- Mitteln (4, 9) zum Verschwenken jeder Klappe (5, 6) um die Drehachse (P-P), und zwar zwischen:
. einer eingeklappten Endposition, in welcher die Klappe mit ihrem vorderen Ende in Richtung gegen das Triebwerk zurückgeklappt ist; und
. einer ausgeklappten Endposition, in der die Klappe wenigstens im wesentlichen transversal zu der Längsachse (X-X) des Triebwerks angeordnet ist, wobei ihr vorderes Ende im Abstand zu jener liegt;
und
- Mitteln (4, 9, 7, 7F, 10) zum Verschieben der Drehachse (P-P) entlang der Längsachse (X-X) des Triebwerks zwischen einer vorgefahrenen Position und einer zurückgefahrenen Position und umgekehrt,
dadurch gekennzeichnet
- daß radiale Anschlagmittel mit Elementen (16, 28) vorgesehen sind, die mit dem vorderen Ende jeder Klappe (5, 6) verbunden sind und mit zugeordneten Elementen (15, 3) zusammenwirken können, die mit dem Triebwerk verbunden sind;
- und daß die radialen Anschlagmittel derart ausgebildet sind, daß sie das Ausklappen der Klappe in der vorgefahrenen Position der Drehachse (P-P) verhindern und dieses Ausklappen in der zurückgefahrenen Position der Drehachse erlauben.

2. Schubumkehrvorrichtung nach Anspruch 1, dadurch gekennzeichnet, daß der Abstand (x) zwischen der vorgefahrenen und zurückgefahrenen Position entlang der Längsachse (X-X) des Triebwerks in der Größenordnung von 1% bis 2% des Durchmessers (D) der Austrittsöffnung des Triebwerks liegt.

3. Schubumkehrvorrichtung nach Anspruch 1 oder 2,
dadurch gekennzeichnet, daß die Mittel (4, 9) zum Verschieben der Drehachse (P-P) von den Mitteln (4, 9) zum Schwenken der Klappe (5, 6) gebildet sind.

4. Schubumkehrvorrichtung nach einem der Ansprüche 1 bis 3, dadurch gekennzeichnet, daß die Mittel (4, 9) zum Verschieben der Drehachse (P-P) entlang der Längsachse (X-X) des Triebwerks Führungsmittel mit Gleitführung (7F) und Gleitstück (7) aufweisen.

5. Schubumkehrvorrichtung nach Anspruch 1,
dadurch gekennzeichnet, daß jeder Klappe (5, 6) zwei Gleitstücke (7) und zwei Gleitführungen (7F) zugeordnet sind, wobei die Gleitstücke die Drehachse (P-P) definieren und wobei die Position der Drehachse entlang der Längsachse (X-X) des Triebwerks durch die relative Lage jedes Gleitstücks in der jeweiligen Gleitführung definiert ist.

6. Schubumkehrvorrichtung nach Anspruch 5,
dadurch gekennzeichnet, daß die Gleitstücke (7) mit der Klappe (5, 6) verbunden sind, wogegen die Gleitführungen (7F) auf dem Triebwerk vorgesehen sind.

7. Schubumkehrvorrichtung nach einem der Ansprüche 1 bis 6, dadurch gekennzeichnet, daß die Drehachse (P-P) in der zurückgefahrenen Position weiter von der Längsachse (X-X) des Triebwerks entfernt ist als in der vorgefahrenen Position und daß die Mittel (4, 9, 7, 7F, 10) zum Verschieben der Drehachse (P-P) entlang der Längsachse (X-X) des Triebwerks die Drehachse (P-P) von der Längsachse (X-X) des Triebwerks entfernen können, wenn die Drehachse (P-P) von ihrer vorgefahrenen Position in ihre zurückgefahrene Position übergeht, und umgekehrt die Drehachse (P-P) an die Längsachse (X-X) des Triebwerks annähern können, wenn die Drehachse (P-P) von ihrer zurückgefahrenen Position in ihre vorgefahrene Position übergeht.

8. Schubumkehrvorrichtung nach Anspruch 7 und einem der Ansprüche 4 bis 6,
dadurch gekennzeichnet, daß die Gleitführungen (7F) eine abgewinkelte oder gekrümmte Form aufweisen, wobei der vordere Abschnitt der Gleitführungen den der horizontalen Achse (X-X) nächstliegenden Abschnitt bildet.

9. Schubumkehrvorrichtung nach einem der Ansprüche 4 bis 6, wobei die Klappe (5, 6) von seiten des Triebwerks (M) Druckkräften ausgesetzt wird, welche in Ausklapprichtung wirken,
dadurch gekennzeichnet, daß die Gleitführungen (7F) eine derartige Form haben, daß das Zusammenwirken der Gleitstücke (7) und der Gleitführungen (7F) verbunden mit der Einwirkung der Druckkräfte auf die Klappe die Drehachse (P-P) in ihrer vorgefahrenen Position verriegelt, wenn die Klappe die eingeklappte Endposition und die Drehachse (P-P) die vorgefahrene Position einnimmt.

10. Schubumkehrvorrichtung nach Anspruch 9,
dadurch gekennzeichnet, daß die Gleitführungen (7F) bogenförmig ausgebildet sind, wobei der vordere Abschnitt des Bogens weiter als der mittlere Abschnitt des Bogens von der Längsachse (X-X) des Triebwerks entfernt ist.

11. Schubumkehrvorrichtung nach einem der Ansprüche 1, 2, 3 oder 7,
dadurch gekennzeichnet, daß die Mittel (4, 9) zum Verschieben der Drehachse (P-P) entlang der Längsachse (X-X) des Triebwerks (M) für jede Klappe zwei drehbare Drehbolzenträger (10) aufweisen, die jeweils von einer mit dem Triebwerk verbundenen Drehachse (10a) getragen werden und jeweils einen exzentrischen Drehbolzen (7) tragen, wobei die beiden Drehbolzen fluchtend ausgerichtet sind, um die Drehachse (P-P) zu definieren.

12. Schubumkehrvorrichtung nach einem der Ansprüche 1 bis 11, dadurch gekennzeichnet, daß ein Kniehebelsystem (11, 12, 13) vorgesehen ist, welches von elastischen Widerlagermitteln (14) belastet wird, die derart ausgebildet sind, daß sie zum einen der Drehachse (P-P) zwei der vorgefahrenen und der zurückgefahrenen Position entsprechende stabile Positionen ermöglichen und zum anderen eine Veränderung der Lage der Drehachse (P-P) bei Einwirkung einer Kraft zulassen, die größer als ein von den elastischen Widerlagermitteln (14) vorgegebener Schwellwert ist.

13. Schubumkehrvorrichtung nach Anspruch 12, wobei die Drehachse (P-P) von zwei fluchtend ausgerichteten Drehbolzen (7) definiert ist, die auf beiden Seiten der Klappe angeordnet sind,
dadurch gekennzeichnet, daß das Kniehebelsystem für jeden Drehbolzen (7) einen Schwingarm (12, 13) aufweist, welcher an seinem einen Ende mit dem Drehbolzen verbunden ist und an seinem anderen Ende auf einem Schaft (11) gelenkig gelagert ist, der sich entlang einer zur Längsachse (X-X) des Triebwerks parallelen Achse bewegen kann, wobei der Schaft von einem Federwiderlager (14) belastet ist, das derart ausgebildet ist, daß es seiner axialen Verschiebung entgegenwirkt.

14. Schubumkehrvorrichtung nach Anspruch 13, mit zwei gegenüberliegenden und symmetrisch in Bezug auf die Längsachse (X-X) des Triebwerks angeordneten Klappen (5, 6),
dadurch gekennzeichnet, daß das Kniehebelsystem für jedes Paar Drehbolzen (7), die gegenüberliegend angeordnet und jeweils mit einer der beiden gegenüberliegenden Klappen (5, 6) verbunden sind, einen im wesentlichen in der Symmetrieebene des Triebwerks liegenden Schaft (11) sowie zwei symmetrische Schwingarme (12, 13) aufweist, die jeweils gelenkig an dem Schaft (11) befestigt und jeweils mit einem der Drehbolzen (7) verbunden sind.

15. Schubumkehrvorrichtung nach einem der Ansprüche 1 bis 14,
dadurch gekennzeichnet, daß die radialen Anschlagmittel zum einen von der Vorderkante (28) der Klappe (5, 6) und zum anderen von der Hinterkante des stromauf gelegenen Teils (3) des Triebwerks (M) gebildet sind, wobei die Vorderkante der Klappe derart ausgebildet ist, daß sie wenigstens lokal unter die Hinterkante des stromauf liegenden Triebwerkteils greifen kann.

16. Schubumkehrvorrichtung nach einem der Ansprüche 1 bis 14,
dadurch gekennzeichnet, daß die radialen Anschlagmittel zum einen von Vorsprüngen (27) gebildet sind, die in Bezug auf die Vorderkante der Klappe (5, 6) längs vorspringen, und zum anderen von Aufnahmen (26), die axial in Bezug auf die Hinterkante des stromauf liegenden Triebwerkteils angeordnet sind und jeweils einen Vorsprung (27) aufnehmen können.

17. Schubumkehrvorrichtung nach einem der Ansprüche 1 bis 14,
dadurch gekennzeichnet, daß die radialen Anschlagmittel zum einen von wenigstens einem Anschlagelement (25; 40) gebildet sind, das mit dem vorderen Ende der Klappe verbunden ist, und zum anderen von genauso vielen Aufnahmen (19, 20; 38), die mit dem feststehenden stromauf gelegenen Teil (1, 2) verbunden sind und mit denen jeweils ein Anschlagelement zusammenwirken kann, wobei die Anschlagelemente und die Aufnahmen ein Nockenprofil aufweisen, welches eine Reaktionskraft mit einer longitudinalen Komponente hervorruft, die dem Zurückfahren der Klappe entgegenwirkt.

18. Schubumkehrvorrichtung nach Anspruch 17,
dadurch gekennzeichnet, daß jede Aufnahme (19, 20) vorne am Nockenprofil einen vorderen Bereich (34) zur Führung des zugehörigen Anschlagelementes (25) beim Verschieben der Drehachse (P-P) zwischen ihrer vorgefahrenen und zurückgefahrenen Position aufweist, wobei der Führungsbereich derart ausgebildet ist, daß er eine Verschiebung des Anschlagelementes (25) entlang einer in Bezug auf die Längsachse (X-X) im wesentlichen geneigten Bahn hervorrufen kann, um beim Verschieben des Anschlagelementes nach hinten ein Über-Einklappen der Klappe (5, 6) hervorzurufen.

19. Schubumkehrvorrichtung nach Anspruch 17 oder 18,
dadurch gekennzeichnet, daß jede Aufnahme (19, 20) nach hinten durch eine parallel zur Längsachse (X-X) verlaufende radiale Anschlagsfläche (21) verlängert ist, die derart ausgebildet ist, daß sie dem zugehörigen Anschlagelement (25) als Anschlag dient, wenn die Klappe (5, 6) in ihre zurückgeklappte Position gebracht wird, um die Kniehebelsysteme (10 - 14) in Schwenkbewegung zu versetzen.

20. Schubumkehrvorrichtung nach einem der Ansprüche 1 bis 19, wobei die Klappe (5, 6) von Seiten des Triebwerks (M) in Ausklapprichtung Druckkräften ausgesetzt wird,
dadurch gekennzeichnet,
- daß jede Klappe (5, 6) in der eingeklappten Position in Richtung des Über-Einklappens der Klappe der Krafteinwirkung von elastischen Mitteln (50) ausgesetzt ist; und
- daß die Schubumkehrvorrichtung Rückfahr-Verhinderungsmittel (19, 20, 25) aufweist, die den Übergang der Drehachse (P-P) von ihrer vorgefahrenen Position in ihre zurückgefahrene Position verhindern, solange die von dem Triebwerk (M) in Ausklapprichtung auf die Klappe ausgeübten Druckkräfte größer als die von den elastischen Mitteln (50) auf die Klappe ausgeübte Gegenkraft sind.

21. Schubumkehrvorrichtung nach Anspruch 20,
dadurch gekennzeichnet, daß die Rückfahr-Verhinderungsmittel (19, 20, 25) in die radialen Anschlagmittel integriert sind.

22. Schubumkehrvorrichtung nach Anspruch 20 oder 21,
dadurch gekennzeichnet, daß die elastischen Mittel (50) in die radialen Anschlagmittel (15, 16) integriert sind.

23. Schubumkehrvorrichtung nach Anspruch 20 oder 21,
dadurch gekennzeichnet, daß die elastischen Mittel (50) getrennt von den radialen Anschlagmitteln (15, 16) ausgebildet sind und von dem vorderen Ende jeder Klappe (5, 6) oder von dem Triebwerk (1) getragen werden, wobei die elastischen Mittel (50) mit Stützelementen (56, 58) zusammenwirken, die von dem Triebwerk bzw. von dem vorderen Ende der Klappe (5, 6) getragen werden.

24. Schubumkehrvorrichtung nach einem der Ansprüche 20 bis 23,
dadurch gekennzeichnet, daß die elastischen Mittel (50) als abgefederte Kolben (51) ausgebildet sind.

25. Schubumkehrvorrichtung nach einem der Ansprüche 20 bis 23,
dadurch gekennzeichnet, daß die elastischen Mittel (50) als Blattfedern (57) ausgebildet sind.

26. Schubumkehrvorrichtung nach einem der Ansprüche 21 bis 25,
dadurch gekennzeichnet, daß die radialen Anschlagmittel (15, 16) für jede Klappe (5, 6) wenigstens ein mit dem vorderen Ende der Klappe verbundenes Anschlagelement (25) und wenigstens eine mit dem Triebwerk (M) verbundene Aufnahme (19, 20) aufweisen, wobei die Aufnahme (19, 20) in Richtung der Triebwerkachse (X-X) offen ist und das Zusammenwirken des Anschlagelementes (25) und der Aufnahme (19, 20) dem Zurückfahren der Drehachse (P-P) von ihrer vorgefahrenen Position in ihre zurückgefahrene Position entgegenwirkt, wenn die zugehörige Klappe die eingeklappte Position einnimmt.

27. Schubumkehrvorrichtung nach einem der Ansprüche 12 bis 26,
dadurch gekennzeichnet, daß Mittel (60 - 62) zum Erhöhen der Härte der elastischen Widerlagermittel (14) beim Zurückziehen der Klappe (5, 6) von ihrer ausgeklappten Position in ihre eingeklappte Position vorgesehen sind, wobei die Drehachse (P-P) dann die zurückgefahrene Position einnimmt.

28. Schubumkehrvorrichtung nach Anspruch 27,
dadurch gekennzeichnet, daß die Mittel (60 - 62) zum Erhöhen der Härte hydraulisch ausgebildet sind.

29. Schubumkehrvorrichtung nach einem der Ansprüche 1 bis 28, wobei die Klappe (5, 6) nicht ständig durch das Triebwerk (M) beträchtlichen Kräften ausgesetzt ist,
dadurch gekennzeichnet, daß wenigstens eine Druckkammer (68) vorgesehen ist, die Niederdruckabgas des Triebwerks (M) aufnimmt und mit einer elastischen Dichtung (66) versehen ist, welche sich abdichtend gegen die Innenseite der Klappe legt und dort eine Druckzone (65) von präziser Fläche begrenzt, wenn die Klappe (5, 6) eingeklappt ist.

30. Düsentriebwerk für Luftfahrzeuge,
dadurch gekennzeichnet, daß eine Schubumkehrvorrichtung nach einem der Ansprüche 1 bis 29 vorgesehen ist.

## Claims

1. Thrust inverter for an aircraft jet engine (M), comprising:
- at least one door (5, 6) of which the rear end is mounted so as to pivot with respect to the said engine about a pivot axis (P-P) transverse to the longitudinal axis (X-X) of the said engine;
- means (4, 9) to cause each door (5, 6) to pivot about the said pivot axis (P-P) between :
. an extreme retracted position in which the said door is folded with its front end directed towards the said engine; and
. an extreme deployed position in which the said door is disposed at least substantially transversely to the said longitudinal axis (X-X) of the engine, with its front end at a distance therefrom; and
- means (4, 9, 7, 7F, 10) for displacing the said pivot axis (P-P) along the said longitudinal axis (X-X)ofthe engine between an advanced position and a recoiled position and vice versa,
characterised:
- in that it comprises radial abutment means comprising elements (16, 28) solid with the front end of each door (5, 6) and able to cooperate with conjugate elements (15, 3) solid with the said engine;
- and in that the said radial abutment means are adapted to forbide the deployment of the said door when the said pivot axis (P-P) is in the advanced position and to permit this deployment when the said pivot axis is in the said recoiled position.

2. Thrust inverter according to claim 1, characterised in that the distance (x) separating the said advanced and recoiled positions along the longitudinal axis (X-X) of the engine is of the order of 1 % to 2% ofthe diameter (D) of the outlet orifice of the engine.

3. Thrust inverter according to one of claims 1 or 2, characterised in that the said means (4, 9) for displacing the said pivot axis (P-P) are formed by the pivot means (4, 9) of the said door (5, 6).

4. Thrust inverter according to one of claims 1 to 3, characterised in that the said means (4, 9) for displacing the said pivot axis (P-P) along the said longitudinal axis (X-X) of the engine comprise guiding means with slideways (7F) and slide blocks (7).

5. Thrust inverter according to claim 1, characterised in that two slide blocks (7) and two slideways (7F) are associated with each door (5, 6), the said slide blocks defining the said pivot axis (P-P) and the position ofthe said pivot axis along the said longitudinal axis (X-X) of the engine being defined by the relative position of each slide block in each slideway.

6. Thrust inverter according to claim 5, characterised in that the said slide blocks (7) are solid with the said door (5, 6), whereas the said slideways (7F) are provided on the said engine.

7. Thrust inverter according to one of claims 1 to 6, characterised in that, in the recoiled position, the said pivot axis (P-P) is further from the said longitudinal axis (X-X) of the engine than in the advanced position and in that the said means (4, 9, 7, 7F, 10) for displacing the said pivot axis (P-P) along the said longitudinal axis (X-X) of the engine are able to move the said pivot axis (P-P) further apart the said longitudinal axis (X-X) of the engine when the said pivot axis (P-P) passes from its advanced position to its recoiled position and, conversely, to move the said pivot axis (P-P) closer to the said longitudinal axis (X-X) of the engine when the said pivot axis (P-P) passes from its recoiled position to its advanced position.

8. Thrust inverter according to claim 7 and one of claims 4 to 6, characterised in that the said slideways (7F) are in a bent or arcuate shape, the front portion ofthe said slideways being the portion closest to the said horizontal axis (X-X).

9. Thrust inverter according to one of claims 4 to 6, wherein the said door (5, 6) is subjected, from the said engine (M), to pressing forces acting in the direction of deployment, characterised in that the said slideways (7F) are of a shape such that, when the said door is in the extreme retracted position and when the said pivot axis (P-P) is in the advanced position, the cooperation of the said slide blocks (7) with the said slidewavs (7F), associated with the action of the said pressing forces on the said door, locks the said pivot axis (P-P) in its advanced position.

10. Thrust inverter according to claim 9, characterised in that the said slideways (7F) are in the shape of an arc, of which the front portion is further away from the said longitudinal axis (X-X) ofthe engine than the central portion of the said arc.

11. Thrust inverter according to one of claims 1, 2, 3 or 7, characterised in that the said means (4, 9) for moving the said pivot axis (P-P) along the said longitudinal axis (X-X) of the engine (M) comprise, for each door, two rotary pivots supports (10) each carried by a axis of rotation (10a) solid with the engine and each carrying an eccentric pivot (7), the two pivots being aligned to define the said pivot axis (P-P).

12. Thrust inverter according to any of claims 1 to 11, characterised in that it comprises a bracing system (11, 12, 13) acted upon by elastic abutment means (14), adapted, on the one hand, to provide the said pivot axis (P-P) with two stable positions corresponding respectively to the said advanced and recoiled positions and, on the other hand, to permit a change in position of the said pivot axis (P-P) under the effect of a force greater than a threshold determined by the said elastic abutment means (14).

13. Thrust inverter according to claim 12, wherein the said pivot axis (P-P) is defined by two aligned pivots (7), respectively disposed on both sides of the said door, characterised in that the bracing system comprises, for each pivot (7), a connecting bar (12, 13) connected to the said pivot at one of its ends and articulated at its other end on a rod (11) able to move axially along an axis parallel to the longitudinal axis (X-X) ofthe engine, the said rod being acted upon by a spring abutment (14) able to oppose its axial displacement.

14. Thrust inverter according to claim 13, comprising two doors (5, 6) which are opposite and symmetrical with respect to the said longitudinal axis (X-X) of the engine, characterised in that for each pair of pivots (7) disposed facing each other and respectively associated with one and the other ofthe two opposite doors (5, 6), the said bracing system comprises a rod (11) extending substantially in the plane of symmetry of the engine, and two symmetrical connecting bars (12, 13) each articulated to the said rod (11) and connected respectively to one of the said pivots (7).

15. Thrust inverter according to any one of claims 1 to 14, characterised in that the said radial abutment means are formed, on the one hand, by the front edge (28) of the said door (5, 6) and, on the other hand, by the rear edge of the upstream part (3) of the said engine (M), the said front edge of the door being able to engage at least locally under the said rear edge of the said upstream part of the engine.

16. Thrust inverter according to any one of claims 1 to 14, characterised in that the said radial abutment means are formed, on the one hand, by pins (27) protruding longitudinally with respect to the front edge ofthe said door (5, 6) and, on the other hand, by housings (26) made axially relative to the rear edge of the upstream part of the said engine and able to each house a pin (27).

17. Thrust inverter according to any one of claims 1 to 14, characterised in that the said radial abutment means are formed, on the one hand, by at least one abutment element (25; 40) solid with the front end of the said door and, on the other hand, by the equivalent number of receptacles (19, 20; 38) solid with the fixed upstream part (1, 2) and with each of which an abutment element can cooperate, the said abutment elements and receptacles having a cam profile adapted to cause a reaction comprising a longitudinal component able to oppose the recoil of the door.

18. Thrust inverter according to claim 17, characterised in that each receptacle (19, 20) comprises, at the front of the cam profile, a front portion (34) for guiding the corresponding abutment element (25) during movements of the pivot axis (P-P) between its advanced and recoiled positions, the said guide portion being adapted to cause a displacement of the abutment element (25) in accordance with a trajectory substantially inclined with respect to the longitudinal axis (X-X), so as to cause an over-retraction of the door (5, 6) during a rearward displacement of the said abutment element.

19. Thrust inverter according to one of claims 17 or 18, characterised in that each receptacle (19, 20) is extended to the rear by a radial abutment face (21) parallel to the longitudinal axis (X-X) able to serve as an abutment for the corresponding abutment element (25) when the door (5, 6) is brought into its folded position so as to cause the bracing systems (10-14) to move in a reciprocating manner.

20. Thrust inverter according to any one of claims 1 to 19, wherein the said door (5, 6) is subjected, by the engine (M), to pressing forces in the deployment direction,
characterised:
- in that, in the retracted position, each door (5, 6) is subjected to the action of elastic means (50) in the direction of the over-retraction of the said door; and
- in that the said inverter comprises anti-recoil means (19, 20, 25) which forbide the passage of the said pivot axis (P-P) from its advanced position to its recoiled position while the pressing forces exerted by the said engine (M) on the said door in the deployment direction are greater than the opposite force exerted on the said door by the said elastic means (50).

21. Thrust inverter according to claim 20, characterised in that the said anti-recoil means (19, 20, 25) are integrated in the said radial abutment means.

22. Thrust inverter according to one of claims 20 or 21, characterised in that the said elastic means (50) are integrated in the said radial abutment means (15, 16).

23. Thrust inverter according to one of claims 20 or 21, characterised in that the said elastic means (50) are independent of the said radial abutment means (15, 16) and are canied by the front end of each door (5, 6) or by the engine (10), the said elastic means (50) cooperating with abutments (56, 58) carried by the engine or by the front end of the said door (5, 6) respectively.

24. Thrust inverter according to one of claims 20 to 23, characterised in that the said elastic means (50) are formed by spring-loaded pistons (51).

25. Thrust inverter according to one of claims 20 to 23, characterised in that the said elastic means (50) are formed by leaf springs (57).

26. Thrust inverter according to one of claims 21 to 25, characterised in that the said radial abutment means (15, 16) comprise, for each door (5, 6), at least one abutment element (25) solid with the front end of the said door and at least one receptacle (19, 20) solid with the said engine (M), the said receptacle (19, 20) being open to face the axis (X-X) of the said engine and the cooperation of the said abutment element (25) and of the said receptacle (19, 20) opposing the recoil of the said pivot axis (P-P) from its advanced position to its recoiled position when the corresponding door is in the retracted position.

27. Thrust inverter according to one of claims 12 to 26, characterised in that it comprises means (60-62) for hardening the said elastic abutment means (14), during retraction of the said door (5, 6) from its deployed position to its retracted position, the said pivot axis (P-P) being then in the recoiled position.

28. Thrust inverter according to claim 27, characterised in that the said hardening means (60-62) are hydraulic.

29. Thrust inverter according to any one of claims 1 to 28, wherein the said door (5, 6) is not subjected spontaneously to significant pressing forces by the said engine (M), characterised in that it comprises at least one pressurised housing (68), receiving low pressure exhaust gases from the said engine (M)and provided with a flexible seal (66) which, when the said door (5, 6) is retracted, is applied in a sealing manner against the internal face of the said door, defining therein a pressurised zone (65) of a accurate area.

30. Aircraft jet engine, characterised in that it comprises a thrust inverter as specified in any one of claims 1 to 29.
